# FASCICULE DE BREVET EUROPEEN

(11) **EP 0 445 035 B1**
(45) Date de publication et mention de la délivrance du brevet: **01.06.1994**
(21) Numéro de dépôt: 91400543.4
(22) Date de dépôt: 28.02.1991
(51) Int. Cl.: B23K 20/12, B23K 13/01

(54) **Procédé de soudage par friction**
Verfahren zum Reibschweissen
Friction welding method

(30) Priorité: 02.03.1990 FR 9002618
(43) Date de publication de la demande: 04.09.1991
(73) Titulaire: SOCIETE NATIONALE D'ETUDE ET DE CONSTRUCTION DE MOTEURS D'AVIATION, "S.N.E.C.M.A.", F-75015 Paris (FR)
(72) Inventeur: Ferte, Jean-Pierre, F-91100 Corbeil-Essonnes (FR); Pierquin, François, F-91540 Mennecy (FR)
(74) Mandataire: Berrou, Paul

(56) Documents cités:
- DE-B- 1 177 756
- FR-A- 2 107 474
- FR-A- 2 299 940
- GB-A- 982 337
- V.I. Vill' :"Friction welding of metals", American Welding Society, Inc., New York, 1962, pages 61,62

## Description

L'invention concerne un procédé de soudage par friction.

Les procédés connus de soudage par friction ainsi que les machines permettant de réaliser ces opérations ont été cités p. ex. dans FR-A 2 641 222 (publié le 6.7.90) qui a notamment proposé une solution pour obtenir une longueur finale précise et reproductible de la pièce soudée.

Il apparaît toutefois que des problèmes de qualité subsistent notamment dans l'application desdits procédés à l'obtention de pièces pour moteurs aéronautiques, réalisées en superalliages à base de nickel à durcissement structural. Sur certaines pièces en effet, de mauvaises tenues mécaniques dues à des phénomènes de propagation de fissures ont été observées et leur origine est située dans certaines altérations métallurgiques dans les zones soudées consécutives à un soudage par friction inertielle insuffisamment maîtrisé, notamment au niveau des cycles thermiques dans les zones soudées.

On connaît par ailleurs, par FR A-2 299 940 un procédé de soudage sous pression faisant intervenir des phénomènes de diffusion intermétallique et un passage à l'état superplastique du matériau. Les parties à souder des pièces métalliques sont soumises à un cycle alterné de chauffage et de refroidissement répété plusieurs fois.

La publication de AMERICAN WELDING SOCIETY INC. NEW YORK, 1962, intitulée "Friction Welding of Metals" décrit aux pages 61, 62 un procédé de soudage par friction selon le préambule de la revendication 1, comportant un préchauffage des surfaces à assembler en utilisant une source complémentaire externe d'énergie sous forme de brûleurs à gaz et des courants à haute fréquence peuvent être utilisés.

Un procédé de soudage par friction permettant d'améliorer les résultats obtenus par rapport aux procédés antérieurement connus et répondant aux conditions relevées ci-dessus dans lequel le cylce thermique des deux parties de pièce dans la zone soudée est piloté, outre par le réglage des paramètres classiques du soudage sur la machine, par un apport thermique complémentaire généré par un moyen associé de chauffage par induction est caractérisé en ce que ledit apport thermique est maintenu durant un temps déterminé après l'arrêt de l'opération de soudage par friction proprement dite et en ce que les deux parties (1,2) de pièce sont en superalliage à base de nickel à forte proportion de phase durcissante.

L'invention comporte des modalités particulières avantageuses de réalisation.

D'autres caractéristiques et avantages de l'invention seront mieux compris à la lecture de la description qui va suivre des modes de réalisation de l'invention, en référence aux dessins annexés sur lesquels :

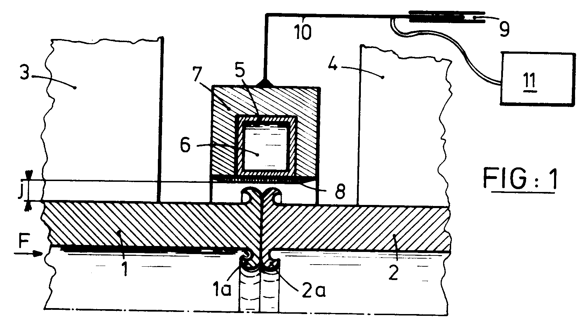

- la figure 1 représente une vue partielle schématique d'une machine à souder par friction équipée d'un moyen de chauffage par induction, selon un premier mode de réalisation de l'invention ;

Le principe du soudage par friction inertielle dont un exemple de mise en oeuvre est représenté sur la figure 1 est bien connu en soi. Deux parties 1 et 2 de pièce à souder sont maintenues au moyen des mors de serrage, respectivement 3 et 4 d'une machine à souder partiellement représentée sur la figure 1. Dans les applications particulièrement visées par l'invention aux pièces de moteurs aéronautiques, il s'agit habituellement de pièces tournantes de révolution telles que le soudage d'arbres ou de rotors en superalliages à base de nickel. Selon ce principe connu, la partie 2 de pièce est fixe, tandis que la partie de pièce 1 est entraînée en rotation, solidarisée au moyen d'un embrayage avec un volant d'inertie. La partie de pièce 1 est rapprochée de la partie de pièce 2 et lorsqu'elles entrent en contact, une force de pression F maintient le contact entre les deux surfaces S₁ et S₂ de pièce qui générent un échauffement par frottement, dissipant l'énergie cinétique initiale emmagasinée. Quand les pièces s'immobilisent, une déformation des surfaces S₁ et S₂ est obtenue et produit un bourrelet 1a et 2a de part et d'autre du plan de soudage et le soudage est achevé.

Selon un autre procédé, de mise en oeuvre analogue, dit de soudage par friction pilotée, le processus fait intervenir deux phases successives. Tout d'abord, la pièce tournante est entraînée en rotation à vitesse constante par un moteur et frotte sur la pièce fixe sous l'effet d'une pression axiale modérée, provoquant ainsi un échauffement progressif. Lorsque l'échauffement est suffisant, un effort axial accru est appliqué pendant une durée déterminée, ce qui provoque un forgeage des pièces et la création de bourrelets par déformation, réalisant également le soudage.

De manière remarquable et conforme à l'invention, lesdits procédés de soudage par friction sont modifiés par l'adjonction d'un apport thermique complémentaire effectué dans la zone des parties de pièce à souder en utilisant un moyen de chauffage par induction. Pour la mise en oeuvre de ce procédé modifié, conforme à l'invention, une machine à souder est équipée selon un premier mode de réalisation représenté sur la figure 1. Ladite machine comporte un inducteur constitué d'une spire unique 5 dont la cavité interne 6 est refroidie par circulation d'eau. Ladite spire 5 est recouverte d'une culasse magnétique 7 et sur sa face interne d'un revêtement 8 ayant des propriétés d'isolation, à la fois électrique et thermique.

Cet inducteur enveloppe les parties de pièce à souder et peut être prévu en deux parties pour faciliter les montages/démontages. L'inducteur comporte des points de fixation à la machine qui le relient notamment à un coulisseau symbolisé en 9 qui permet la mise en place précise par rapport aux pièces à souder, un jeu j suffisant étant en outre ménagé entre le diamètre interne de l'inducteur et les pièces pour permettre aux bourrelets 1a et 2a de se former sans entrer en contact avec l'inducteur.

L'alimentation en courant de l'inducteur est assurée par des conducteurs rigides 10. Un système de régulation symbolisé en 11, prenant en compte la température de la pièce dans la zone de soudage, permet de contrôler la puissance débitée par le générateur de courant alimentant l'inducteur de manière à piloter le cycle thermique de la zone soudée. L'apport thermique en fonction des applications particulières et des mises au point effectuées en fonction des résultats peut intervenir pendant tout ou partie du cycle de soudage, l'inducteur étant mis en place avant le soudage.
La maitrise du cycle thermique dans les zones soudées de pièce assurée par le pilotage de l'apport thermique grâce au premier mode de réalisation représenté schématiquement sur la figure 1 procure une amélioration notable des résultats. En effet, du point de vue métallurgique, dans les applications aux superalliages à durcissement structural, notamment à base de nickel pour pièces de moteurs aéronautiques, les microstructures précédemment obtenues dans les zones soudées ne sont pas satisfaisantes. On observe en effet une mise en solution des phases durcissantes de l'alliage par suite d'un échauffement local bref et important, suivie d'une reprécipitation fine lors du refroidissement. Les microstructures ainsi obtenues conduisent à des propriétés mécaniques, notamment les résistances à la propagation de fissures en fatigue ou au fluage, qui sont insuffisantes et nettement détériorées par rapport au matériau de base dans les zones non affectées.
L'application particulière suivante de l'invention permet, sur un superalliage à base de nickel à forte proportion de phase durcissante, de régénérer partiellement ou presque totalement la microstructure du métal de base et les caractéristiques mécaniques, en particulier la tenue à la propagation des fissures à chaud.
A la fin de l'opération de soudage, au lieu de laisser, suivant la pratique actuelle, la liaison se refroidir naturellement à partir de sa température d'environ 1250 - 1300°C, le moyen de chauffage est mis en oeuvre pour maintenir la liaison à une température comprise entre 1100 et 1150°C, et cela pendant un temps qui peut varier de 15 à 60 minutes. A la fin de ce maintien la température est réduite suivant une loi programmée conduisant à des vitesses de refroidissement, entre 1100 et 700°C, comprises entre 100 et 200° C/min.
Ce palier à 1100-1150°C permet de régénérer une population de précipités durcissantes aux joints de grains de la zone de liaison et le refroidissement contrôlé permet de développer une précipitation durcissante intergranulaire correspondante à celle du métal de base.
La tenue à la propagation de fissure à chaud (vers 600 - 700°C) qui sur une soudure faite de façon conventionnelle ne représente qu'une fraction infime de celle du métal de base enrivon 1,5 %, est ramenée sensiblement au niveau de celle du métal de base.
Un refroidissement trop rapide de la zone de liaison introduit également des contraintes résiduelles de traction défavorables. Tous ces inconvénients sont supprimés, ou du moins sensiblement atténués grâce à la maîtrise obtenue du cycle thermique de l'opération de soudage par friction.
Outre ces avantages importants de qualité des résultats obtenus, l'invention peut également apporter un autre avantage notable. En effet, dans les applications où d'importantes énergies sont mises en jeu, la solution proposée d'apport thermique complémentaire grâce à un moyen de chauffage par induction constitue un moyen techniquement intéressant et moins coûteux d'accroître les capacités de la machine à souder. En effet, dans le cas d'un soudage par friction inertielle, les masses inertielles de la machine nécessaires peuvent être réduites et dans le cas d'un soudage par friction pilotée, la puissance du moteur d'entraînement peut être réduite pour tenir compte du préchauffage des parties de pièce à souder obtenu grâce au chauffage par induction. Ainsi, pour une puissance installée donnée de machine - masses inertielles ou moteur d'entraînement - les capacités se trouvent accrues par rapport aux machines classiques.

L'application particulière suivante illustre les avantages du procédé par un exemple de mise en oeuvre.

Une machine de soudage par friction inertielle donnée de capacité énergétique limitée à 3.10⁵ joules sera incapable de souder des pièces en superalliage de nickel à durcissement structural dont la surface à souder est supérieure à 4.10³mm². Le préchauffage des pièces, juste avant la mise en pression des deux pièces, suivant la procédure schématisée à la figure 1, à une température comprise entre 600 et 800°C pendant un temps varient de 1 à 5 Mn permet, en appliquant ensuite la procédure conventionnelle de soudage, de souder des surfaces pouvant atteindre 5.10³mm³, ce qui démontre un accroissement notable des capacités.

## Revendications

1. Procédé de soudage par friction dans lequel le cycle thermique des deux parties (1,2) de pièce dans la zone soudée est pilotée en plus du réglage des paramètres classiques du soudage sur la machine par un apport thermique complémentaire généré par un moyen associé de chauffage par induction (5-11) caractérisé en ce que ledit apport thermique est maintenu durant un temps déterminé après l'arrêt de l'opération de soudage par friction proprement dite et en ce que les deux parties (1,2) de pièce sont en superalliage à base de nickel à forte proportion de phase durcissante.

2. Procédé de soudage par friction selon la revendication 1 dans lequel durant l'étape de chauffage des zones soudées et des zones voisines affectées intervenant après l'arrêt de l'opération de soudage par friction proprement dite, une température comprise entre 1100°C et 1150°C est maintenue grâce audit moyen de chauffage par induction (5-11) pendant une durée comprise entre 15 et 60 minutes, puis, après ledit maintien, la température est abaissée suivant une vitesse de refroidissement comprise entre 100°C et 200°C par minute, entre 1100°C et 700°C.

## Claims

1. Friction welding method in which the heat cycle of the two workpiece parts (1, 2) in the welded zone is controlled, in addition to the adjustment of the conventional welding parameters on the machine, by an additional heat influx generated by an associated induction-heating means (5-11), characterized in that the said heat influx is maintained for a specified time after stopping the actual friction welding operation and in that the two workpiece parts (1, 2) are made of a nickel-based super-alloy having a high proportion of hardening phase.

2. Friction welding method according to Claim 1, in which, during the step of heating the welded zones and the affected neighbouring zones which arise after stopping the actual friction welding operation, a temperature lying between 1100°C and 1150°C is maintained by virtue of the said induction heating means (5-11) for a duration lying between 15 and 60 minutes and then, after the said temperature maintenance, the temperature is lowered to between 1100°C and 700°C at a cooling rate lying between 100°C and 200°C per minute.

## Patentansprüche

1. Verfahren zum Reibschweißen, bei dem der thermische Arbeitszyklus für die beiden Werkstückteile (1, 2) in dem geschweißten Bereich neben der Einstellung der klassischen Parameter für das Schweißen an der Maschine noch durch eine zusätzliche Wärmezufuhr gesteuert wird, die durch ein angebautes Induktionsheizmittel (5 - 11) erzeugt wird,
dadurch gekennzeichnet,
daß die genannte Wärmezufuhr während einer bestimmten Zeitdauer nach Beendigung des eigentlichen Reibschweißvorgangs aufrechterhalten wird, und daß die beiden Werkstoffteile (1, 2) aus einer Superlegierung auf Nickelbasis mit hohem Anteil an härtender Phase bestehen.

2. Verfahren zum Reibschweißen nach Anspruch 1, bei dem während der nach Beendigung des eigentlichen Reibschweißvorgangs erfolgenden Phase des Heizens der Schweißbereiche und der betroffenen angrenzenden Bereiche mit Hilfe des genannten Induktionsheizmittels (5 - 11) für eine Zeitdauer von 15 bis 60 Minuten eine Temperatur zwischen 1100°C und 1150°C gehalten wird, und nach Beendigung dieses genannten Temperaturhaltens die Temperatur zwischen 1100°C und 700°C mit einer Abkühlungsgeschwindigkeit von 100°C bis 200°C pro Minute gesenkt wird.
